Europäisches Patentamt

(19) European Patent Office

Office européen des brevets

(11) Numéro de publication: **0 168 370**

**B1**

(12) **FASCICULE DE BREVET EUROPÉEN**

(45) Date de publication du fascicule du brevet:
25.01.89

(51) Int. Cl.⁴: **H 01 G 1/11, H 01 G 1/005**

(21) Numéro de dépôt: **85870049.5**

(22) Date de dépôt: **02.04.85**

(54) Condensateur auto-régénérable protégé par coupe-circuit thermique et son procédé de fabrication.

(30) Priorité: **06.05.84 EP 84200653**
**22.05.84 EP 84870064**

(43) Date de publication de la demande:
**15.01.86 Bulletin 86/3**

(45) Mention de la délivrance du brevet:
**25.01.89 Bulletin 89/4**

(84) Etats contractants désignés:
**AT BE CH DE FR GB IT LI LU NL SE**

(56) Documents cité:
**EP-A-0 109 100**
**DE-A-2 359 431**
**FR-A-930 476**
**FR-A-1 356 845**
**GB-A-1 447 982**
**US-A-3 579 061**

**IBM TECHNICAL DISCLOSURE BULLETIN, vol. 25,
no. 8, janvier 1983, page 4081, New York, US; J.J.
BUTERA et al.: "Overcurrent protection for
aluminium electrolytic capacitors"**

(73) Titulaire: **ABB Jumet, S.A., Siége Social Zone
Industrielle Jumet- Gosselies, B-6040 Jumet (BE)**

(72) Inventeur: **Voglaire, Franz, Rue Bois des Collines
15, B-1420 Braine l'Alleud (BE)**

(74) Mandataire: **Callewaert, Jean, Bureau Gevers S.A.
rue de Livourne 7 bte 1, B-1050 Bruxelles (BE)**

## Description

Il existe un procédé de fabrication de condensateurs auto-régénérables composés d'un ou de plusieurs rouleaux dans lequel on applique sur des rubans en matière diélectrique une couche de métal dont l'épaisseur à chaque endroit peut varier en fonction de la distance de cet endroit des bords latéraux du ruban, dans lequel on enroule les rubans métallisés pour former au moins un rouleau, dans lequel on applique des électrodes de contact sur les faces latérales du rouleau et dans lequel on relie les électrodes de contact à des bornes de raccordement (EP-A-1-109 100 qui appartient à l'état de la technique visé dans l'article 54 (13) CBE).

La régénération automatique d'un condensateur ainsi fabriqué, après un bref court-circuit momentané entre électrodes opposées, est due à l'évaporation du métal des électrodes à l'endroit du défaut. La fin de vie d'un tel condensateur est marquée par un court-circuit non réparable des électrodes. Si le courant de court-circuit est important, il peut fondre un fil fusible placé dans son circuit. Dans certains cas, le court-circuit peut provoquer l'explosion du condensateur. Le courant de court-circuit peut aussi être faible au point de ne pas fondre un fil fusible. Dans ce dernier cas, un échauffement intense a lieu au voisinage du point de percement et amène le destruction du condensateur.

On a déjà essayé de se protéger contre les suites néfastes de ces défauts en enfermant le rouleau de condensateur dans un boîtier hermétique, déformable sous l'effet d'une pression interne. Comme la destruction d'un rouleau de condensateur est en général accompagnée d'un dégagement de gaz, ce phénomène a déjà été utilisé pour provoquer la déformation d'une partie du boîtier à laquelle est fixée une extrémité d'un fil de rupture, permettant de mettre hors circuit le condensateur en cas d'augmentation de la pression interne (CH-A-472 103).

On a également utilisé déjà des dispositifs fusibles actionnés par la température ambiante locale à l'endroit du dispositif fusible, appelés coupe-circuits thermiques. De tels coupe-circuits thermiques ont été placés dans des cuves contenant des appareils ou éléments susceptibles de chauffer, immergés dans de l'huile. La convection naturelle de l'huile dans la cuve y assurait une température uniforme. L'inventeur a essayé de disposer de tels coupe-circuits thermiques à l'intérieur de cuves de condensateurs dans l'air, dans l'huile lorsque la convection naturelle était empêchée ou dans des masses d'enrobage non liquides. De tels agencements se sont révélés inefficaces parce que le coupe-circuit était en général trop éloigné de l'endroit du défaut.

Suivant le document EP-A-0 109 100, qui appartient à l'état de la technique visé dans l'article 54 (3) CBE il est en particulier connu, dans un condensateur auto-régénérable, d'appliquer sur des rubans en matière diélectrique une couche de métal dont l'épaisseur moyenne diminue de part et d'autre d'une zone à épaisseur de métallisation moyenne forte localisée à une distance déterminée des bords latéraux de l'ensemble des rubans.

L'invention a pour but un condensateur auto-régénérable protégé efficacement par un coupe-circuit thermique, ainsi que son procédé de fabrication.

Suivant l'invention, le procédé de fabrication de condensateurs auto-régénérable composés d'un ou de plusieurs rouleaux comprend les étapes suivantes: on applique sur des rubans en matière diélectrique une couche de métal dont l'épaisseur moyenne diminue de part et d'autre d'une zone à épaisseur de métallisation moyenne forte localisée à une distance déterminée des bords latéraux de l'ensemble des rubans, on applique des électrodes de contact sur les faces latérales du rouleau, on dispose dans l'axe de chaque rouleau, à l'endroit de ladite zone à forte épaisseur de métallisation, un coupe-circuit thermique, on relie ce coupe-circuit thermique en série avec un fil de raccordement du rouleau dans lequel le coupe-circuit est disposé et on relie les électrodes de contact à des fils de raccordement.

Grâce à la bande à forte épaisseur de métallisation, la détérioration d'un rouleau de condensateur est localisée à l'endroit de cette bande, parce que la résistance électrique de la couche conductrice y est plus faible. Les raisons de fin de vie à cet endroit sont encore accentuées si cette bande est située au voisinage du centre de la bobine, là ou l'échauffement normal de service est le plus élevé.

En choisissant la largeur et l'emplacement de cette bande par rapport aux bords du ruban isolant, il est possible de circonscrire exactement l'apparition d'un défaut dangereux en un endroit précis le long de l'axe du rouleau et en disposant en cet endroit dans l'axe du rouleau un coupe-circuit thermique, toute détérioration thermique du rouleau de condensateur actionne immédiatement le coupe-circuit thermique et met hors circuit le rouleau de condensateur, même si le courant provoquant l'échauffement néfaste est insuffisant pour fondre un fil fusible normal.

L'invention est décrite ci-dessous par rapport à deux exemples de formes d'exécution en se référant au dessin annexé. Les figures 1 et 2 du dessin sont deux coupes schématiques de paires de rubans différents formant des rouleaux de condensateur. Les figures 3 et 4 sont des coupes à travers les condensateurs suivant l'invention.

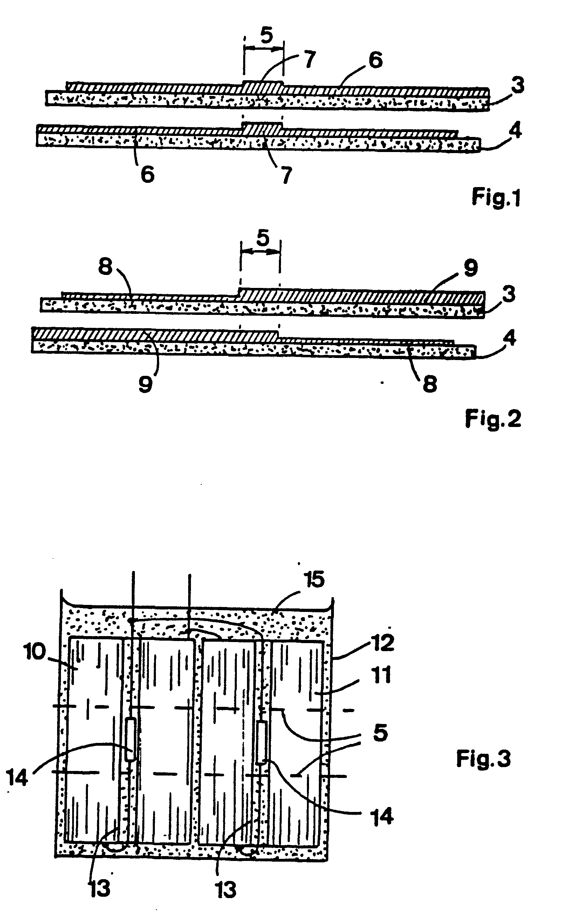

Dans les figures 1 et 2, un rouleau de condensateur est formé par un enroulement d'une paire de rubans isolants 3, 4 métallisés. La métallisation de ces rubans 3 et 4 n'est pas uniforme, mais présente une épaisseur moyenne sensiblement plus faible de part et d'autre d'une bande 5 dont la ligne médiane s'enroule dans un plan perpendiculaire à l'axe du rouleau, notamment, par exemple, le plan de symétrie, perpendiculaire à l'axe du rouleau.

Suivant la figure 1, une couche métallisée 6, de chaque ruban 3 et 4 présente un bourrelet 7 à l'endroit de la bande 5. Cette disposition n'est cependant pas unique, car il suffit, pour obtenir l'effet désiré, que l'épaisseur moyenne de l'ensemble des couches sur les deux rubans 3 et 4 présente une augmentation au voisinage de la bande 5. Ce résultat peut être obtenu aussi, par exemple par une métallisation suivant la figure 2, c'est-à-dire par des couches métallisées présentant d'un côté de la bande 5 une épaisseur 8 faible et, à l'endroit de la bande 5 même et de l'autre côté, une forte épaisseur 9. La forte épaisseur se trouvant, de préférence, du côté où la métallisation s'étend jusqu'au bord du ruban isolant sur lequel est appliquée, par exemple par procédé Schoop, une électrode de contact, par exemple en zinc.

Il va de soi que la bande 5 ne doit pas nécessairement s'enrouler à l'endroit du plan de symétrie du rouleau, perpendiculaire à l'axe de ce dernier, mais peut s'enrouler en un endroit décalé par rapport à ce plan de symétrie. Dans ce cas, le coupe-circuit thermique doit se trouver dans l'axe du rouleau à cet endroit décalé.

A la figure 3, un condensateur composé de deux rouleaux de condensateur 10 et 11 ou de deux rangées 10 et 11 de rouleaux dans un boîtier 12 est montré en coupe. Les deux rouleaux sont montés en parallèle chacun d'eux est constitué en rubans métallisés suivant figure 1 ou 2. L'endroit de la bande à forte épaisseur de métallisation se trouve entre les deux lignes pointillées 5. Dans l'axe de chaque condensateur est disposé, à l'intérieur d'un mandrin 13, un coupe-circuit thermique 14. A l'intérieur du mandrin 13, le coupe-circuit peut être entouré d'air, d'huile ou d'une masse durcie. Dans ce dernier cas, le coupe-circuit 14 peut être entouré d'une gaine ou coquille. Le boîtier 12 peut être rempli d'une masse isolante durcie 15.

La température de fusion des coupe-circuits thermiques est un peu plus élevée que la température de service des condensateurs par exemple 10°C ou si l'enrobage et l'imprégnation des rouleaux de condensateurs nécessite une température un peu plus élevée que la température de service, la température de fusion est un peu plus élevée que cette dernière température. Si la température de traitement thermique des rouleaux de condensateur est relativement élevée, ce traitement est avantageusement exécuté avant le placement des coupe-circuits thermiques dans l'axe du mandrin.

Dans son mode de réalisation préféré, l'invention s'exécute en disposant un seul rouleau de condensateur par boîtier.

Des condensateurs suivant l'invention fabriqués avec des diélectriques usuels, papier, polypropylène etc. sont équipés de coupe-circuits thermiques dont la température de fusion est choisie dans une gamme de 90°C à 180°C. Les coupe-circuits se présentent dans ce cas sous forme de fils ou lamelles relativement épaisses et donc facilement manipulables en alliages fondant à ces températures. De tels alliages sont notamment composés d'au moins deux éléments parmi les métaux suivants: Sn, Pb, Cd, Bi et Hg. Des exemples d'alliages avec des températures de fusion entre 90°C et 180°C sont: 80 % Hg, 20 % Bi (90°C) ; 53 % Bi , 33 % Pb, 14 % Sn (96°C); 54 % Bi, 26 % Sn, 20 % Cd (103°C); 40 % Bi, 40 % Pb, 20 % Sn (111°C); 50 % Sn, 32 % Pb, 182 Cd (145°C); 67 % Sn, 33 % Pb (180°C); 68 % Sn, 32 % Cd (180°C). Les fils ou lamelles constituant les coupe-circuits thermiques sont de préférence protégés par une gaine ou coquille suffisemment large pour assurer une interruption certaine du chemin conducteur en cas de fusion. Une telle gaine est indispensable lorsque le coupe-circuit est enrobé dans une masse durcie.

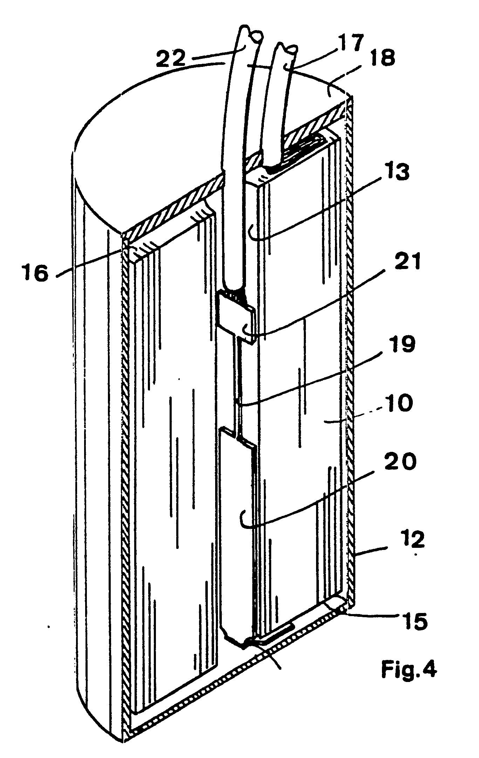

La figure 4 montre, en perspective, une coupe à travers un condensateur suivant l'invention composé d'un seul rouleau 10 dans un boîtier 12.

Le rouleau de condensateur 10 présente un trou axial 13. Ce trou axial peut être dû au retrait d'un mandrin autour duquel le rouleau de condensateur a été enroulé ou peut être un trou axial d'un mandrin isolant creux faisant partie du rouleau de condensateur 10.

Le rouleau de condensateur 10 est recouvert de deux électrodes latérales 15 et 16 obtenues par exemple par projection de gouttelettes de métal selon le procédé Schoop. Un fil de raccordement 17 traversant un couvercle 18 est soudé à l'électrode supérieure 16. Une lamelle en métal conducteur, fusible, par exemple, en alliage plomb étain, a été estampillé en l'occurrence de manière à présenter une partie 19 de largeur réduite, servant de fusible, entre deux parties 20 et 21 à largeur normale. L'extrémite de la partie 20 a été recourbée à angle droit et le tout a été enfilé dans le trou 13 dans l'axe du rouleau de condensateur 10 jusqu'à ce que l'extrémité recourbée de la partie 20 vienne en contact avec l'électrode 15 où elle a été soudée. La partie 19 de largeur réduite doit se trouver à l'endroit du rouleau ou l'épaisseur de la métallisation est plus forte. L'extrémité 21 peut servir directement de fil de raccordement ou peut être soudée à un fil de raccordement isolé 22, comme cela est représenté sur le dessin. Le rouleau de condensateur ainsi équipé peut être imprégné d'un diélectrique adéquat soit par simple trempage, soit par imprégnation sous vide.

Après insertion dans le boîtier 12, de préférence en matière isolante, les espaces libres entre condensateur et boîtier peuvent être remplis d'une matière de remplissage appropriée, par exemple solidifiable à température normale ou thermodurcissable. Cette matière de remplissage peut former une couche relativement épaisse au-dessus du rouleau de condensateur et remplacer ainsi le couvercle 18.

Lorsqu'une matière de remplissage telle que l'huile ne donne pas lieu à un mauvais fonctionnement du fusible en cas de fusion de ce dernier, aucune précaution d'enrobage de la partie 19 de la lamelle ne doit être prise. Dans le cas contraire, la partie 19 de la lamelle peut être entourée de coquilles, non représentées, empêchant la matière de remplissage de venir en contact avec le métal de la partie 19.

## Revendications

1. Procédé de fabrication de condensateurs auto-régénérables composés d'un ou de plusieurs rouleaux, ledit procédé comprenant les étapes suivantes: on applique sur des rubans en matière diélectrique une couche de métal dont l'épaisseur moyenne diminue de part et d'autre d'une zone à épaisseur de métallisation moyenne forte localisée à une distance déterminée des bords latéraux de l'ensemble des rubans, on applique des électrodes de contact sur les faces latérales du rouleau, on dispose dans l'axe de chaque rouleau, à l'endroit de ladite zone à forte épaisseur de métallisation, un coupe-circuit thermique, on relie ce coupe-circuit thermique en série avec un fil de raccordement du rouleau dans lequel le coupe-circuit est disposé et on relie les électrodes de contact à des fils de raccordement.

2. Condensateur auto-régénérable composé d'un ou de plusieurs rouleaux (10, 11) de rubans (3, 4) en une matière diélectrique sur lesquels une couche de métal (6, 8, 9) est appliquée dont l'épaisseur moyenne diminue de part et d'autre d'une zone (5) à épaisseur de métallisation moyenne forte localisée à une distance déterminée des bords latéraux de l'ensemble des rubans, des électrodes de contact (15, 16) étant appliqués sur les faces latérales du rouleau, un coupe circuit thermique (14) étant disposé dans l'axe de chaque rouleau, à l'endroit de ladite zone à forte épaisseur de métallisation, ce coupe-circuit thermique étant relié en série avec un fil de raccordement (22) du rouleau dans lequel le coupe-circuit est disposé, les électrodes de contact étant reliés à des fils (22, 17) de raccordement.

3. Condensateur selon la revendication 2, caractérisé en ce qu'il est composé d'un rouleau de condensateur (10) dans un boîtier (12).

4. Condensateur selon la revendication 3, caractérisé en ce que le boîtier (12) contient plusieurs rouleaux de condensateurs (10, 11) placés côte à côte.

5. Condensateur suivant une des revendications précédentes, caractérisé en ce que le coupe-circuit thermique (14) est un fil ou ruban constitué en un alliage comprenant au moins deux éléments parmi les métaux suivants: Sn, Pb, Cd, Bi, Hg.

6. Condensateur suivant une des revendications précédentes, caractérisé en ce que le coupe-circuit thermique est une lamelle présentant un étranglement (19).

## Patentansprüche

1. Verfahren zur Herstellung von selbsregenerierenden Kondensatoren, die aus einer oder mehreren Rollen bestehen, wobei das genannte Verfahren die folgenden Schritte umfaßt: auf Bändern aus einem dielektrischen Stoff wird eine Metallschicht aufgebracht, deren durchschnittliche Dicke sich beiderseits einer Zone mit starker durchschnittlicher Metallisierungsdicke verkleinert, welche sich in einem bestimmten Abstand von den Seitenrändern der gesamten Bänder befindet, Kontakt-Elektroden werden auf den Seitenflächen der Rolle angebracht, ein thermischer Stromkreisunterbrecher wird in der Achse jeder Rolle an der Stelle der gennanten Zone mit starker Matallisierungsdicke angeordnet, dieser thermische Stromkreisunterbrecher wird mit einem Anschlußdraht der Rolle, in welcher der Stromkreisunterbrecher liegt, in Reihe geschaltet, und die Kontakt-Elektroden werden mit Anschlußdrähen verbunden.

2. Selbstregenerierender Kondensator, der aus einer oder mehreren Rollen (10, 11) von Bändern (3, 4) aus einem dielektrischen Stoff besteht, auf welchen eine Metallschicht (6, 8, 9) aufgebracht ist, wovon die Durchschnittsdicke sich beiderseits einer Zone (5) mit starker durchschnittlicher Metallisierungsdicke verkleinert, welche sich in einem bestimmen Abstand von den Seitenrändern der gesamten Bänder befindet, wobei Kontakt-Elektroden (15, 16) an den Seitenflächen der Rolle angebracht werden, ein thermischer Stromkreisunterbrecher (14) in der Achse jeder Rolle an der Stelle der gennanten Zone mit starker Metallisierungsdicke angeordnet ist, wobei dieser thermische Stromkreisunterbrecher mit einem Anschlußdraht (22) der Rolle, in welcher der Stromkreisunterbrecher liegt, in Reihe geschaltet ist und die Kontakt-Elektroden mit Anschlußdrähten (22, 17) verbunden sind.

3. Kondensator nach Anspruch 2, dadurch gekennzeichnet, daß er aus einer Kondensatorrolle (10) in einem Gehäuse (12) besteht.

4. Kondensator nach Anspruch 3, dadurch gekennzeichnet, daß das Gehäuse (12) mehrere Kondensatorrollen (10, 11), welche Seite an Seite angeordnet sind, enthält.

5. Kondensator nach einem der vorstehenden Ansprüche, dadurch gekennzeichnet, daß der thermische Stromkreisunterbrecher (14) ein Draht bzw. ein Band ist, der bzw. das aus einer wenigstens zwei Elemente unter den folgenden Metallen umfassenden Legierung besteht: Sn, Pb, Cd, Bi, Hg.

6. Kondensator nach einem der vorstehenden Ansprüche, dadurch gekennzeichnet, daß der thermische Stromkreisunterbrecher eine eine Einschnürung (19) aufweisende Lamelle ist.

**Claims**

1. Process for producing self-regenerating capacitors composed of one or more coils, the said process comprising the following steps: there is applied to strips of dielectric material a layer of metal, the average thickness of which diminishes on both sides of a zone having a high average metallization thickness located at a specified distance from the lateral edges of the assembly of the strips, contact electrodes are applied on the lateral faces of the strip, a thermal circuit-breaker is disposed in the axis of each coil, at the place of the said zone having a high metallization thickness, this thermal circuit-breaker is connected in series with a connecting wire of the coil in which the circuit-breaker is disposed and the contact electrodes are connected to connecting wires.

2. Self-regenerating capacitor composed of one or more coils (10, 11) of strips (3, 4) of a dielectric material, on which a layer of metal (6, 8, 9) is applied, the average thickness of which diminishes on both sides of a zone (5) having a high average metallization thickness localized at a specified distance from the lateral edges of the assembly of the strips, contact electrodes (15, 16) being applied on the lateral faces of the coil, a thermal circuit-breaker (14) being disposed in the axis of each coil, at the place of the said zone having a high metallization thickness, this thermal circuit-breaker being connected in series with a connecting wire (22) of the coil in which the circuit-breaker is disposed, the contact electrodes being connected to connecting wires (22, 17).

3. Capacitor according to Claim 2, characterized in that it is composed of a capacitor coil (10) in a casing (12).

4. Capacitor according to Claim 3, characterized in that the casing (12) contains a plurality of coils of capacitors (10, 11) placed side by side.

5. Capacitor according to one of the preceding Claims, characterized in that the thermal circuit-breaker (14) is a wire or strip made of an alloy comprising at least two elements selected from the following metals: Sn, Pb, Cd, Bi, Hg.

6. Capacitor according to one of the preceding Claims, characterized in that the thermal circuit-breaker is a plate exhibiting a throat (19).

Fig.1

Fig.2

Fig.3

Fig.4